# EUROPÄISCHE PATENTSCHRIFT

(11) **EP 1 866 598 B1**
(45) Veröffentlichungstag und Bekanntmachung des Hinweises auf die Patenterteilung: **27.08.2008**
(21) Anmeldenummer: 07721894.9
(22) Anmeldetag: 07.02.2007
(51) Int. Cl.: F41H 7/04, B60R 21/13

(54) **GEGEN ÄUSSERE EXPLOSIONSEINWIRKUNG GESCHÜTZTES, INSBESONDERE MILITÄRISCHES FAHRZEUG**
VEHICLE THAT IS PROTECTED AGAINST AN EXTERNAL EXPLOSION, IN PARTICULAR A MILITARY VEHICLE
VÉHICULE PROTÉGÉ CONTRE DES EFFETS D'EXPLOSIONS EXTERNES, NOTAMMENT VÉHICULE MILITAIRE

(30) Priorität: 09.02.2006 DE 102006005894
(43) Veröffentlichungstag der Anmeldung: 19.12.2007
(73) Patentinhaber: Krauss-Maffei Wegmann GmbH & Co. KG, 80997 München (DE)
(72) Erfinder: SCHLEGL, Eugen, 82194 Gröbenzell (DE)
(74) Vertreter: Feder, Wolf-Dietrich
(86) Internationale Anmeldenummer: PCT/DE2007/000225
(87) Internationale Veröffentlichungsnummer: WO 2007/090381

(56) Entgegenhaltungen:
- EP-A1- 1 547 874
- DE-A1- 10 323 076
- DE-C1- 19 932 114

## Beschreibung

Die Erfindung betrifft ein gegen äußere Exptosionseinwirkung geschütztes, insbesondere militärisches Fahrzeug mit einem auf einem Fahrwerk angeordneten Fahrzeuggehäuse, das in mindestens einer Seitenwand mindestens eine Ein-/Ausstiegstür aufweist, die in einem Türausschnitt der Seitenwand angeordnet ist. EIN SOLCHES FAHRZEUG IST AUS DEZ DE 10323076 A1 BEKANNT.

Wie sich bei Kampfeinsätzen oder auch bei Einsätzen in terroristisch bedrohten Gebieten gezeigt hat, wird bei militärischen Fahrzeugen der Schutz gegen seitlich neben dem Fahrzeug explodierenden Sprengbomben immer wichtiger. Eine Schwachstelle bei der Aufnahme des durch die Explosion erzeugten Drucks stellen naturgemäß die Türen bzw. die Türausschnitte des Fahrzeugs dar. So kann es bei einer seitlich neben dem Fahrzeug auftretenden Explosion geschehen, dass sich die Tür und der Türausschnitt soweit durchbiegen, dass die Tür durch den Türausschnitt gedrückt wird. Es ist bekannt, Tür und Türausschnitt zu verstärken, um die Durchbiegung zu reduzieren. Dies ist gewichtsintensiv, weil die Kräfte bzw. der Druck auf Biegung aufgenommen werden müssen. Eine Verstärkung des Türausschnitts eines LKW ist bekannt aus der EP1 547 874 A1.

Der Erfindung liegt die Aufgabe zugrunde, ein Fahrzeug mit den eingangs und im Oberbegriff des Patentanspruchs 1 angegebenen Merkmalen so auszubilden, dass mit geringem konstruktivem Aufwand und bei wenig mehr Gewicht die Durchbiegung der Seitenwand, insbesondere im Bereich des Türausschnitts, bei einer seitlich neben dem Fahrzeug auftretenden Explosion stark reduziert wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die Erfindung geht von der Erkenntnis aus, dass es hinsichtlich Gewicht und Volumen günstiger ist, Kräfte über Zug-Druck-Streben aufzunehmen als über Biegeträger. Es hat sich gezeigt, dass beim Einsatz der erfindungsgemäßen Druckstrebe die Durchbiegung der Seitenwand um über 60 % reduziert werden konnte, und dies bei einer geringeren Gewichtserhöhung, als wenn Biegeträger verwendet würden.

Ein Grundgedanke der Erfindung besteht demnach darin, eine Druckstrebe durch den Innenraum des Fahrzeuggehäuses zu führen, die sich mit einem Ende an der Seitenwand in unmittelbarer Nachbarschaft zum Türausschnitt abstützt,
während sich das andere Ende an einem dieser Seitenwand gegenüberliegenden Teil der Fahrzeugstruktur abstützt. Dieser Teil kann grundsätzlich auch die gegenüberliegende Seitenwand sein, es hat sich aber als besonders vorteilhaft erwiesen, wenn sich das andere Ende der Druckstrebe an einem im Innenraum des Fahrzeuggehäuses liegenden Teil der Fahrzeugstruktur abstützt, der eine höhere Stabilität aufweist als die Seitenwände. Ein solcher Teil kann beispielsweise bei einem Fahrzeug mit Mittelmotor das Gehäuse des Motortunnels sein.

Um eine möglichst günstige Verteilung der auftretenden Kräfte zu erreichen, hat es sich als besonders vorteilhaft erwiesen, wenn die Druckstrebe im wesentlichen in einer sich in Fahrzeuglängsrichtung erstreckenden Ebene liegt, die senkrecht zur Seitenwand des Fahrzeuggehäuses verläuft. Je nach der Neigung der Seitenwand aus der Vertikalen kann dies eine im wesentlichen horizontale Ebene oder eine um einen kleinen Winkel gegen die Horizontale geneigte Ebene sein.

Um eine weitere Gewichtsersparnis zu erreichen, ist es auch möglich, die Druckstrebe in Einbauteile oder Halterungen für im Fahrzeuggehäuse angeordnete Geräte zu integrieren. Derartige Halterungen und Einbauten können ggf. mit einer Versteifung versehen die Funktion der Druckstrebe übernehmen.

Es hat sich weiterhin als vorteilhaft erwiesen, wenn die Druckstrebe vertikal gesehen etwa in der Mitte zwischen der Unterkante und der Oberkante des Türausschnitts angeordnet ist.

Im Folgenden wird anhand der beigefügten Zeichnungen ein Ausführungsbeispiel für ein militärisches Fahrzeug nach der Erfindung näher erläutert.

In den Zeichnungen zeigen:
- Fig. 1: einen von oben gesehenen Ausschnitt aus dem Innenraum des Fahrzeuggehäuses eines militärisches Fahrzeugs im Bereich des Fahrersitzes;
- Fig. 2: in einer Darstellung analog Fig. 1 den Innenraum des Fahrzeuggehäuses bei einer variierten Ausführungsform;
- Fig. 3: den Ausschnitt nach Fig. 1 in einer Ansicht von vorne bei ausgebautem Fahrersitz;
- Fig. 4: den Ausschnitt nach Fig. 1 und 2 in einer perspektivischen Ansicht bei ausgebautem Fahrersitz.

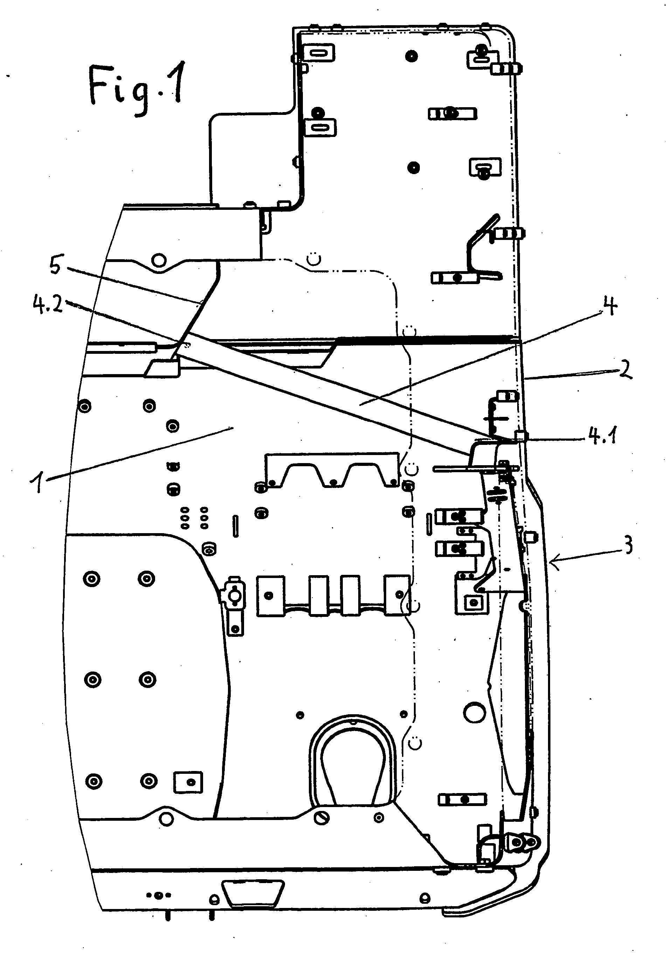

In den Fig. 1 bis 4 ist ein Ausschnitt aus dem Innenraum des Fahrzeuggehäuses 1 eines im übrigen nicht dargestellten militärischen Fahrzeugs, beispielsweise eines LKWs, dargestellt. Das Fahrzeuggehäuse, also beispielsweise das Fahrergehäuse des LKWs, besitzt an der Seite des in Fig. 1 nicht dargestellten Fahrersitzes 6 eine Seitenwand 2 mit einem Türausschnitt 3, in dem die nicht dargestellte Ein-/Ausstiegstür angeordnet ist.

Zur Abstützung der Seitenwand 2 gegen seitliche Blasteinwirkung dient bei der Ausführung nach Fig. 1 eine Druckstrebe 4 mit einem ersten äußeren Ende 4.1 und einem zweiten inneren Ende 4.2. Mit dem äußeren Ende 4.1 stützt sich die Druckstrebe 4 an der Seitenwand 2 in einem unmittelbar an den Türausschnitt 3 angrenzenden Bereich ab, während sich ihr inneres Ende 4.2 am Gehäuse 5 des Motortunnels abstützt. Es hat sich gezeigt, dass bei LKWs mit Mittelmotor diese Art der Abstützung am Gehäuse des Motortunnels besonders günstig ist, da dieses Gehäuse im allgemeinen sehr steif ist und sich außerdem an einer günstigen Stelle zum Türausschnitt 3 befindet.

Durch die hiermit erreichte geringe Länge der Druckstrebe 4 wird auch die Ausknickgefahr erheblich reduziert.

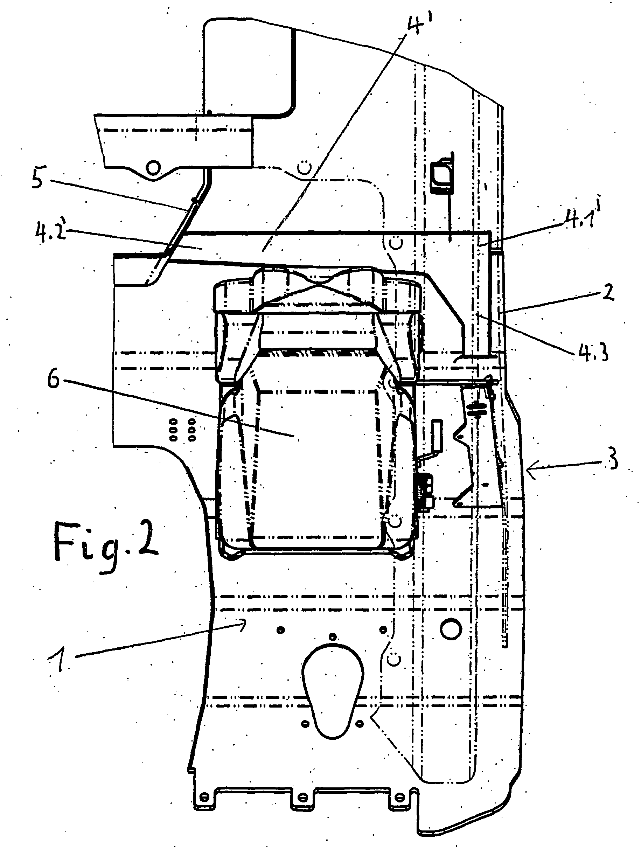

Es ist grundsätzlich günstig, mit der Abstützung des äußeren Endes 4.1 der Druckstrebe 4, wie Fig. 1 zeigt, möglichst nahe an den Türausschnitt 3 heranzugehen. Wie an der Ausführung nach Fig. 2 bis 4 zu ersehen, ist dabei aber der Fahrersitz 6 im Wege. Aus diesem Grund ist bei dieser Ausführung an das äußere Ende 4.1' der Druckstrebe 4' eine sich horizontal entlang der Seitenwand 2 nach vorne erstreckende und an dieser Seitenwand anliegende Querstrebe 4.3 angesetzt und mit der Druckstrebe 4' fest verbunden. Wie aus Fig. 2 ersichtlich, wird hiermit aus der Druckstrebe 4' und der Querstrebe 4.3 eine gemeinsame Abstützung gebildet, die im wesentlichen L-förmig ausgebildet ist. Dies eröffnet die Möglichkeit, den Fahrersitz 6 an seiner Rückseite und einem Teil seiner Außenseite durch die L-förmige Abstützung zu umfassen und mit der Gesamtabstützung sehr nahe an die hintere Begrenzung des Türausschnitts 3 heranzukommen.

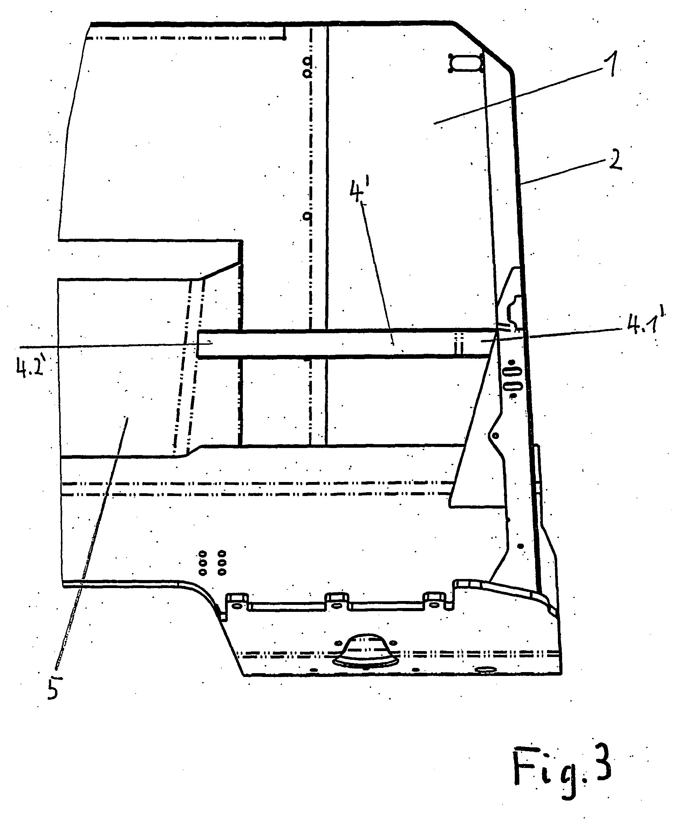

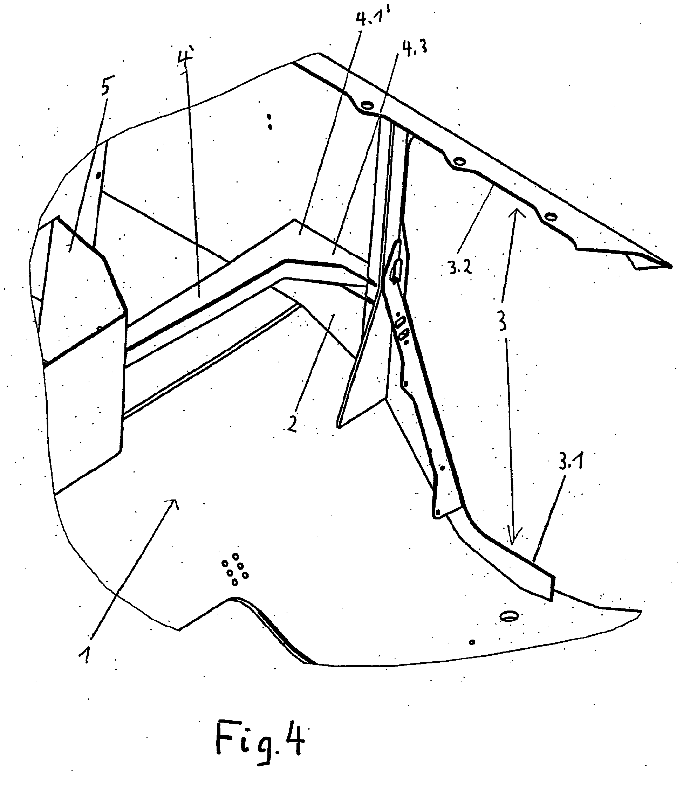

Insgesamt hat es sich als besonders günstig erwiesen, wenn, wie aus den Fig. 3 und 4 zu ersehen, Druckstrebe 4' und Querstrebe 4.3 in einer horizontalen oder gegen die Horizontale um einen kleinen Winkel geneigte Ebene angeordnet sind, die in etwa auf der Mitte zwischen der Unterkante 3.1 und der Oberkante 3.2 des Türausschnitts 3 liegt.

## Patentansprüche

1. Gegen äußere Explosionswirkung geschütztes, insbesondere militärisches Fahrzeug, mit einem auf einem Fahrwerk angeordneten Fahrzeuggehäuse (1), das in mindestens einer Seitenwand (2) mindestens eine Ein-/Ausstiegstür aufweist, die in einem Türausschnitt (3) der Seitenwand (2) angeordnet ist, wobei mindestens eine Druckstrebe (4, 4') vorhanden ist, die durch den Innenraum des (1) in vorgegebener Höhe zwischen der Unterkante (3.1) und der Oberkante (3.2) des Türausschnitts (3) verläuft und deren erstes Ende (4.1, 4.1') sich an einem unmittelbar an den Türausschnitt (3) angrenzenden Bereich der Seitenwand (2) abstützt, während sich ihr zweites Ende an einem dieser Seitenwand gegenüberliegenden Teil der Fahrzeugstruktur abstützt, **dadurch gekennzeichnet, dass** die Druckstrebe (4, 4') im wesentlichen in einer sich in Fahrzeuglängsrichtung erstreckenden, horizontalen Ebene liegt, die senkrecht zur Seitenwand (2) des Fahrzeuggehäuses (1) verläuft.

2. Fahrzeug nach Anspruch 1, **dadurch gekennzeichnet, dass** die Druckstrebe (4, 4') in einer Höhe verläuft, die im wesentlichen in der Mitte zwischen der Unterkante (3.1) und der Oberkante (3.2) des Türausschnitts (3) liegt.

3. Fahrzeug nach einem der Ansprüche 1 oder 2, **dadurch gekennzeichnet, dass** sich das zweite Ende der Druckstrebe an der gegenüberliegenden Seitenwand abstützt.

4. Fahrzeug nach einem der Ansprüche 1 oder 2, **dadurch gekennzeichnet, dass** sich das zweite Ende der Druckstrebe an einem im Innenraum des Fahrzeuggehäuses liegenden, eine höhere Stabilität als die Seitenwände aufweisenden Teil der Fahrzeugstruktur abstützt.

5. Fahrzeug nach Anspruch 4, **dadurch gekennzeichnet, dass** sich bei einem Fahrzeug mit Mittelmotor das zweite Ende (4.2, 4.2') der Druckstrebe (4, 4') am Gehäuse (5) des Motortunnels abstützt.

6. Fahrzeug nach einem der Ansprüche 1 bis 5, **dadurch gekennzeichnet, dass** die Druckstrebe in Einbauteile oder Halterungen für im Fahrzeuggehäuse angeordnete Geräte integriert ist.

7. Fahrzeug nach einem der Ansprüche 1 bis 6, **dadurch gekennzeichnet, dass** die Druckstrebe (4, 4') an ihrem ersten Ende (4.1') mit einer sich horizontal entlang der Seitenwand (2) erstreckenden und an dieser anliegenden Querstrebe (4.3) fest verbunden ist.

8. Fahrzeug nach Anspruch 7; **dadurch gekennzeichnet, dass** Druckstrebe (4') und Querstrebe (4.3) gemeinsam eine insgesamt L-förmige Abstützung bilden.

9. Fahrzeug nach Anspruch 8, **dadurch gekennzeichnet, dass** die L-förmige Abstützung einen Fahrzeugsitz (6) an dessen Rückseite und mindestens einen Teil der Außenseite umfaßt.

## Claims

1. Vehicle, in particular military vehicle, protected against the effect of an external explosion, having a vehicle housing (1) which is arranged on a chassis and has in at least one side wall (2) at least one entry/exit door, arranged in a door cutout (3) of the side wall (2), with at least one compression strut (4, 4') being present, which runs through the interior of the vehicle housing (1) at a predetermined height between the lower edge (3.1) and the upper edge (3.2) of the door cutout (3) and the first end (4.1, 4.1') of which is supported on a region of the side wall (2) immediately adjoining the door cutout (3), while its second end is supported on a part of the vehicle structure lying opposite this side wall, **characterised in that** the compression strut (4, 4') lies substantially in a horizontal plane extending in the longitudinal direction of the vehicle and running perpendicularly to the side wall (2) of the vehicle housing (1).

2. Vehicle according to Claim 1, **characterised in that** the compression strut (4, 4') runs at a height which lies substantially midway between the lower edge (3.1) and the upper edge (3.2) of the door cutout (3).

3. Vehicle according to one of Claims 1 and 2, **characterised in that** the second end of the compression strut is supported on the opposite side wall.

4. Vehicle according to one of Claims 1 and 2, **characterised in that** the second end of the compression strut is supported on a part of the vehicle structure lying in the interior of the vehicle housing and having a higher stability than the side walls.

5. Vehicle according to Claim 4, **characterised in that,** in the case of a vehicle with a central engine, the second end (4.2, 4.2') of the compression strut (4, 4') is supported on the housing (5) of the motor tunnel.

6. Vehicle according to one of Claims 1 to 5, **characterised in that** the compression strut is integrated into fittings or mountings for apparatus arranged in the vehicle housing.

7. Vehicle according to one of Claims 1 to 6, **characterised in that t**he compression strut (4, 4') is firmly connected at its first end (4.1') to a cross strut (4.3) extending horizontally along the side wall (2) and lying against the latter.

8. Vehicle according to Claim 7, **characterised in that** compression strut (4') and cross strut (4.3) together form an overall L-shaped support.

9. Vehicle according to Claim 8, **characterised in that** the L-shaped support encompasses a vehicle seat (6) at the rear side of the latter and at least a part of the outer side.

## Revendications

1. Véhicule protégé contre un effet d'explosion extérieur, en particulier véhicule militaire, comprenant un carter de véhicule (1) disposé sur un châssis, qui présente dans au moins une paroi latérale (2) au moins une porte d'entrée/sortie, qui est disposée dans une ouverture de porte (3) de la paroi latérale (2), au moins un arc-boutant (4, 4') étant présent, lequel passe à travers l'espace intérieur du carter du véhicule (1) à une hauteur prédéfinie entre l'arête (3.1) et l'arête supérieure (3.2) de l'ouverture de porte (3) et dont la première extrémité (4.1, 4.1') s'appuie sur une zone, directement contiguë à l'ouverture de porte (3), de la paroi latérale (2), alors que sa seconde extrémité s'appuie sur une partie, opposée à cette paroi latérale, de la structure du véhicule, **caractérisé en ce que** l'arc-boutant (4, 4') est disposé sensiblement dans un plan horizontal, s'étendant dans la direction longitudinale du véhicule, qui est agencé perpendiculairement à la paroi latérale (2) du carter de véhicule (1).

2. Véhicule selon la revendication 1, **caractérisé en ce que** l'arc-boutant (4, 4') est agencé à une hauteur qui est disposé sensiblement au centre entre l'arête inférieure (3.1) et l'arête supérieure (3.2) de l'ouverture de porte (3).

3. Véhicule selon l'une quelconque des revendications 1 ou 2, **caractérisé en ce que** la seconde extrémité de l'arc-boutant s'appuie sur la paroi latérale opposée.

4. Véhicule selon l'une quelconque des revendications 1 ou 2, **caractérisé en ce que** la seconde extrémité de l'arc-boutant s'appuie sur une partie, disposée à l'intérieur du carter du véhicule et présentant une stabilité supérieure aux parois latérales, de la structure du véhicule.

5. Véhicule selon la revendication 4, **caractérisé en ce que**, dans le cas d'un véhicule avec un moteur central, la seconde extrémité (4.2, 4.2') de l'arc-boutant (4, 4') s'appuie sur le carter (5) du tunnel de moteur.

6. Véhicule selon l'une quelconque des revendications 1 à 5, **caractérisé en ce que** l'arc-boutant est intégré des parties encastrées ou des fixations pour des appareils disposés dans le carter du véhicule.

7. Véhicule selon l'une quelconque des revendications 1 à 6, **caractérisé en ce que** l'arc-boutant (4, 4') est relié de façon fixe par sa première extrémité (4.1') à une barre transversale (4.3) s'étendant horizontalement le long de la paroi latérale (2) et s'appliquant sur celle-ci.

8. Véhicule selon la revendication 7, **caractérisé en ce que** l'arc-boutant (4') et l'entretoise (4.3) forment ensemble un support globalement en L.

9. Véhicule selon la revendication 8, **caractérisé en ce que** le support en L comporte un siège de véhicule (6) sur son côté arrière et au moins une partie du côté extérieur.
